# FASCICULE DE BREVET EUROPEEN

(11) **EP 2 655 546 B1**
(45) Date de publication et mention de la délivrance du brevet: **25.05.2016**
(21) Numéro de dépôt: 11802089.0
(22) Date de dépôt: 20.12.2011
(51) Int. Cl.: C09K 11/06, G21K 4/00

(54) **SCINTILLATEUR ORGANIQUE SOLIDE DOPE PAR UN OU PLUSIEURS ELEMENTS CHIMIQUES**
MIT EINEM ODER MEHREREN CHEMISCHEN ELEMENTEN DOTIERTER ORGANISCHER FESTSTOFFSZINTILLATOR
SOLID ORGANIC SCINTILLATOR DOPED BY ONE OR MORE CHEMICAL ELEMENTS

(30) Priorité: 21.12.2010 FR 1060977
(43) Date de publication de la demande: 30.10.2013
(73) Titulaire: Commissariat à l'Énergie Atomique et aux Énergies Alternatives, 75015 Paris (FR)
(72) Inventeur: HAMEL, Matthieu, F-50100 Cherbourg-Octeville (FR); DARBON, Stéphane, F-75013 Paris (FR); NORMAND, Stéphane, 50540 ISIGNY LE BUAT (FR); TURK, Grégory, F-78000 Versailles (FR)
(74) Mandataire: Ahner, Philippe
(86) Numéro de dépôt international: PCT/EP2011/073482
(87) Numéro de publication internationale: WO 2012/085004

(56) Documents cités:
- EP-A1- 0 913 448
- WO-A1-2009/095376
- WO-A2-2004/017095
- DE-A1- 19 521 500
- GB-A- 1 264 045
- US-B1- 6 544 442
- CHO Z H, TSAI C M: "Tin and lead loaded plastic scintillators for low energy gamma-ray detedction withparticular application to high rate detection", IEEE TRANSACTIONS ON NUCLEAR SCIENCE, vol. NS-22, 1975, pages 72-80, XP002651002,

## Description

### DOMAINE TECHNIQUE

La présente invention a trait à des scintillateurs organiques solides dopés par un au plusieurs éléments chimiques comprenant une matrice polymérique spécifique dans laquelle sont dispersés des composés fluorophores, ces scintillateurs présentant la combinaison de caractéristiques suivantes :
*un taux de dopage en élément(s) chimique(s) pouvant être élevé ;
*une capacité d'émission à des longueurs d'onde élevées (en particulier, à des longueurs d'onde d'au moins égales à 550 nm) ; et
*éventuellement, un temps de déclin de scintillation rapide.

L'invention trouve notamment son application :
*dans le domaine médical, plus particulièrement de l'imagerie médicale faisant intervenir les rayons X ;
*dans le domaine de la physique expérimentale, et plus particulièrement pour la conception de diagnostics d'imagerie X pour les expériences plasma du laser Méga Joule.

### ÉTAT DE LA TECHNIQUE ANTÉRIEURE

Classiquement, un scintillateur est destiné à la détection de rayonnement ou de particules de haute énergie, qui nécessite, pour ce faire, de comprendre un matériau capable de convertir l'énergie de radiations ionisantes issues des particules à détecter (ces radiations ionisantes pouvant être par exemple, des rayons X, des rayons γ dont les énergies vont de quelques keV à plusieurs MeV) par interaction radiation-matière en lumière visible ou proche UV. La lumière émise va ensuite être analysée par le biais d'un photodétecteur éventuellement couplé au scintillateur (ce photodétecteur pouvant être un photomultiplicateur, une photodiode, un film photographique ou encore une caméra CCD).

Pour être efficace, un scintillateur doit répondre préférentiellement aux caractéristiques suivantes :
- il doit présenter une bonne efficacité d'absorption des radiations ionisantes ;
- il doit pouvoir générer, pour une particule incidente donnée, suffisamment de lumière pour qu'elle puisse être collectée ;
- il doit être transparent à sa propre lumière, pour éviter les pertes ;
- la lumière doit être émise suffisamment rapidement après le passage de la particule, ce qui signifie, en d'autres termes, que le scintillateur doit présenter un temps de déclin de scintillation rapide, en particulier, pour des applications d'imagerie X en environnement radiatif hostile.

En ce qui concerne la capacité d'absorption des radiations, celle-ci est liée au mode d'interaction entre la matière et les rayons, ce mode d'interaction pouvant être l'effet photoélectrique, l'effet Compton et l'effet de production de paires. En ce qui concerne les rayons X, l'absorption de ceux-ci est liée au nombre atomique effectif Z_{efff} ce nombre atomique effectif devant être le plus élevé possible pour permettre l'absorption complète des rayons X par le matériau par effet photoélectrique pour des énergies incidentes inférieures à 100 keV, une absorption complète n'étant pas possible par l'effet Compton (découlant de l'interaction rayonnement matière pour des matériaux présentant un nombre atomique effectif faible), où seule une partie de l'énergie est absorbée dans le matériau constitutif du scintillateur. Ainsi les images X obtenues avec des matériaux générant après interaction avec des photons X incidents un effet Compton présentent une piètre qualité, du fait que les photons X diffusant dans le matériau ne sont pas complètement absorbés par le matériau ou s'ils sont absorbés, peuvent l'être de telle sorte qu'ils contribuent à obtenir une image floue.

A l'heure actuelle, les scintillateurs susceptibles de permettre une absorption des rayons X par effet photoélectrique dominant pour des énergies incidentes inférieures à 100 keV sont des scintillateurs inorganiques tels que des scintillateurs du type YAG, plus particulièrement un scintillateur du type grenat d'yttrium et d'aluminium dopé au césium (Y₃Al₅O₁₂ : Ce).

En revanche, les scintillateurs organiques solides classiquement utilisés (présentant typiquement un nombre atomique effectif Z_{eff} de l'ordre de 5) ne permettent pas d'absorber complètement des rayons X d'énergie allant de 10 à 40 keV, ce qui les rend peu utilisables pour l'imagerie X.

En ce qui concerne l'émission de lumière, un autre phénomène susceptible de fausser la dosimétrie X est le rayonnement dit de «Tcherenkov », se caractérisant par une intensité d'émission continue décroissance en puissance cube inverse de la longueur d'onde depuis l'ultraviolet vers le bleu-rouge.

Enfin, pour être utilisable efficacement dans le domaine de l'imagerie X, il est souhaitable que les scintillateurs présentent un temps moyen rapide de déclin de scintillation due à l'absorption des photons, de sorte notamment à éviter une dégradation de l'imagerie X par les produits de fusion nucléaire hautement énergétiques (tels que les neutrons et les rayons γ de fusion, notamment dans le cas de l'imagerie X pour le laser Méga Joule).

Pour remplir ces trois conditions (à savoir, un scintillateur présentant un nombre atomique effectif élevé, un scintillateur émettant une lumière de fluorescence présentant une longueur d'onde élevée et un scintillateur présentant, avantageusement, un temps de déclin de scintillation rapide), des scintillateurs inorganiques ont été proposés sans être convaincants pour l'imagerie X dédiée à l'expérimentation de Laser Megajoule.

Par exemple :
- les scintillateurs inorganiques comprenant du type YAG sont peu efficaces, compte tenu de leur temps de déclin de scintillation trop élevé (ce temps de déclin s'échelonnant de 60 à 100 ns) ;
- les scintillateurs à base de YI₃ : Ce ; GdI₃ :Ce et LuI₃, s'ils délivrent une lumière de fluorescence importante sous rayonnement X, présentent, toutefois, des temps de déclin de scintillation également élevés (de 30 à 40 ns) et émettent dans le jaune;

Qui plus est, la plupart de ces scintillateurs sont hygroscopiques, ce qui limite leur champ d'application, notamment pour l'imagerie X.

Face à la difficulté de trouver des scintillateurs inorganiques convenant à leurs critères (à savoir, une capacité à absorber des rayonnements essentiellement par effet photoélectrique et une capacité à émettre intensément à des longueurs d'onde élevées, telles que des longueurs d'onde au moins égales à 550 nm), les auteurs de la présente invention se sont tournés vers le développement de scintillateurs organiques solides répondant aux critères susmentionnés.

### EXPOSÉ DE L'INVENTION

Ainsi, l'invention a trait un scintillateur organique solide comprenant une matrice polymérique, dans laquelle sont dispersés un premier composé fluorophore et un deuxième composé fluorophore et un ou plusieurs éléments chimiques choisis parmi Pb et Sn, caractérisé en ce que ledit scintillateur présente une teneur massique en ledit ou lesdits éléments chimiques au moins égal à 5% en masse par rapport à la masse totale du scintillateur et en ce que le scintillateur émet un spectre d'émission comprenant un pic d'émission à une longueur d'onde d'au moins 550 nm et présente un temps de déclin de scintillation inférieur à 20 ns, dans lequel le premier composé répond à la formule (I) telle que définie ci-dessous et le deuxième composé est un composé pérylènediimide répondant à la formule (III) telle que définie ci-dessous.

De par les caractéristiques susmentionnées, les scintillateurs conformes à l'invention présentent de nombreux avantages.

En effet, grâce à la présence significative d'élément chimique tel que défini ci-dessus se traduisant ainsi par un nombre atomique effectif du matériau du scintillateur (Z_{eff}) élevé (par exemple, d'au moins égal à 30), les scintillateurs de l'invention présentent un pouvoir d'arrêt aux radiations important, en particulier pour les radiations X à faible énergie (par exemple, allant de 10 à 40 keV). Qui plus est, toujours grâce au nombre atomique (Z_{eff}) élevé, l'énergie des radiations arrivant sur le scintillateur (telles que des rayons X) d'énergie allant de 10 à 40 keV est complètement absorbée par effet photoélectrique, ce qui est particulièrement intéressant lorsque le scintillateur est destiné à être utilisé pour effectuer de l'imagerie X.

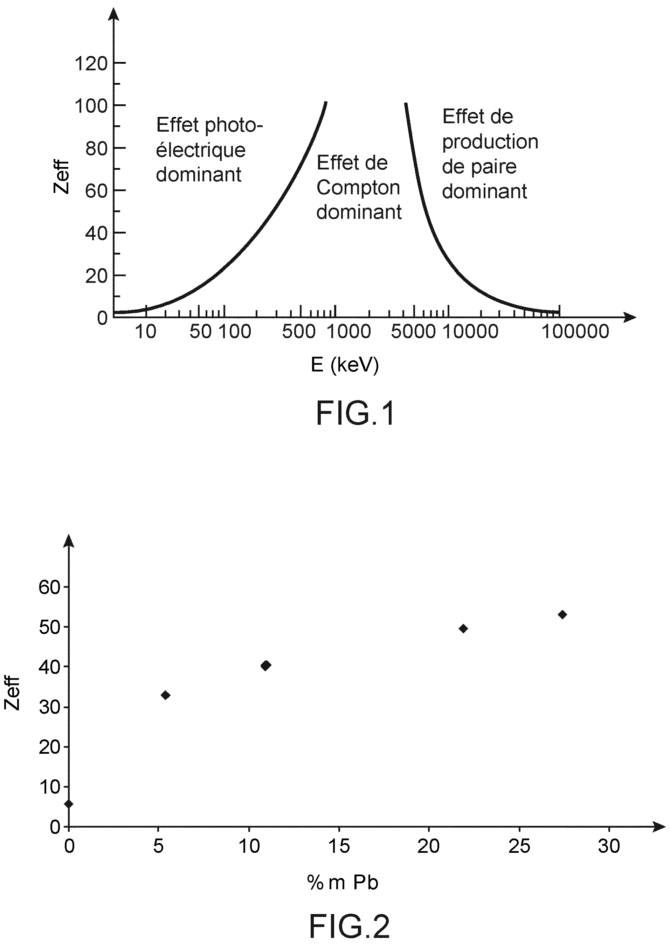

La figure 1 jointe en annexe illustre ce phénomène. En effet, cette figure représente, pour des rayons X, les trois modes d'interaction (respectivement effet photoélectrique, effet Compton et effet de production de paire dominant) entre des rayons X présentant une énergie incidente en keV (représentée par l'abscisse E) et un matériau présentant un nombre atomique effectif donné (ce nombre atomique étant représenté par l'ordonnée Z_{eff}). Il ressort clairement de cette figure, que pour un certain domaine d'énergie X incidente (de 0 à environ 800 keV), plus le nombre atomique (Z_{eff}) est élevé, plus la probabilité d'absorption des rayons X incidents par effet photoélectrique est grande.

D'autre part, grâce à la capacité des scintillateurs de l'invention à émettre un spectre d'émission présentant un pic d'émission à une longueur d'onde d'au moins égale à 550 nm (et pouvant aller, par exemple, jusqu'à 620 nm), il est possible de se dédouaner d'un phénomène parasite classiquement rencontré avec les scintillateurs émettant de l'ultraviolet au bleu : le rayonnement Tcherenkov, susceptible de fausser les résultats, lorsque les scintillateurs sont utilisés dans le domaine de la dosimétrie X.

En outre, les scintillateurs de l'invention présentent un temps de déclin de scintillation inférieur à 20 ns, et de préférence allant de 10 à 15 ns.

Selon l'invention, des éléments chimiques susceptibles d'entrer dans la constitution des scintillateurs de l'invention sont le plomb ou l'étain.

Selon l'invention, le ou les éléments chimiques entrant dans la constitution des scintillateurs de l'invention sont présents à une teneur d'au moins égale à 5% par rapport à la masse totale du scintillateur, en particulier à une teneur allant de 10 à 27% en masse par rapport à la masse totale du scintillateur.

Incorporé à des teneurs à partir de 5% massique par rapport à la masse totale du scintillateur, un élément chimique, tel que le plomb, permet, en particulier, de conférer au matériau du scintillateur un nombre atomique (Z_{eff}) élevé, comme l'atteste la figure 2, qui représente, sur un graphique, l'évolution du nombre atomique (Z_{eff}) en fonction de la teneur massique en plomb (%m Pb).

La teneur massique en élément chimique peut être déterminée par analyse élémentaire.

Selon l'invention, la matrice polymérique peut comprendre un ou plusieurs (co)polymères, ces (co)polymères conférant avantageusement à la matrice des propriétés de transparence.

En particulier, la matrice polymérique peut comprendre avantageusement un (co)polymère comprenant des unités répétitives résultant de la polymérisation d'un ou plusieurs monomères choisis parmi le styrène, le vinyltoluène, le vinylxylène, le méthacrylate de méthyle, l'acide méthacrylique, le méthacrylate de 2-hydroxyéthyle.

Plus particulièrement, la matrice polymérique peut comprendre, selon un premier mode de réalisation, un copolymère comprenant des unités répétitives résultant de la polymérisation du vinyltoluène et de l'acide méthacrylique ou selon un second mode de réalisation un (co)polymère comprenant des unités répétitives résultant de la polymérisation du méthacrylate de 2-hydroxyéthyle.

Le ou les copolymères susmentionnés peuvent être des copolymères réticulés, par exemple, par le biais d'un agent de réticulation, qui peut être un monomère comprenant au moins deux fonctions polymérisables aptes après polymérisation à former pont entre deux chaînes de copolymère. On peut citer comme exemple d'agent de réticulation des monomères di(méth)acrylates.

Dans ce cas, outre les unités répétitives susmentionnées, le copolymère comprendra des unités répétitives issues de la polymérisation dudit agent de réticulation.

Les scintillateurs de l'invention comprennent, comme indiqué ci-dessus,un premier composé fluorophore et un deuxième composé fluorophore.

On précise que, par composé fluorophore, on entend un composé chimique capable d'émettre de la lumière visible de fluorescence après excitation par des photons ou d'autres particules incidentes.

Dans notre cas, le ou les composés fluorophores ont, avantageusement, pour caractéristique de pouvoir absorber des photons de longueurs d'onde appartenant au domaine des UV et de réémettre des photons, de telle sorte que le spectre d'émission de ces composés présentent un pic d'émission à une longueur d'onde d'au moins égale à 550 nm, ce qui constitue une des caractéristiques des scintillateurs comme mentionné ci-dessus.

Avantageusement, les scintillateurs de l'invention peuvent comprendre un premier composé fluorophore apte à absorber des photons et à émettre, suite à cette absorption, des photons, de telle sorte que le spectre d'émission du premier composé fluorophore présente un pic d'émission à une longueur d'onde inférieure à 550 nm et un deuxième composé fluorophore apte à absorber les photons de longueurs d'onde appartenant audit spectre d'émission dudit premier composé fluorophore et à émettre, suite à cette absorption, des photons, de telle sorte que le spectre d'émission dudit deuxième composé fluorophore présente un pic d'émission à une longueur d'onde d'au moins égale à 550 nm.

Le premier composé fluorophore incorporé dans les scintillateurs de l'invention répond à la formule (I) suivante : 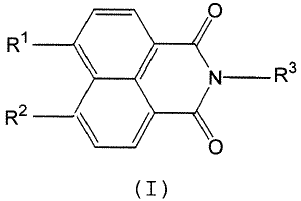 dans laquelle :
*R¹ représente un groupe mésomère donneur ;
*R² représente un atome d'hydrogène ou un groupe mésomère donneur identique ou différent de R¹ ;
*R³ représente :
   - un groupe acyle, ou
   - un groupe hydrocarboné linéaire ou ramifié, saturé ou insaturé, en C₁ à C₂₀, éventuellement substitué, ou
   - un groupe hydrocarboné cyclique saturé en C₃ à C₁₀, éventuellement substitué ou
   - un groupe hétérocyclique saturé en C₃ à C₁₀, éventuellement substitué, ou encore
   - un groupe aryle ou hétéroaryle éventuellement substitué ;
ou de l'un de ses sels.

Conformément à l'invention, le ou les groupes mésomères donneurs représentés par R¹ et éventuellement R² sont, de préférence, choisis parmi :
- les groupes -OR' et -SR' où R' représente un groupe hydrocarboné linéaire ou ramifié, saturé ou insaturé, en C₁ à C₂₀, éventuellement substitué, ou un groupe hydrocarboné cyclique saturé en C₃ à C₁₀, éventuellement substitué, ou encore un groupe aryle ou hétéroaryle éventuellement substitué ; et
- les groupes -NR'R" où R' a la même signification que précédemment, tandis que R" représente soit un atome d'hydrogène, soit un groupe hydrocarboné linéaire ou ramifié, saturé ou insaturé, en C₁ à C₂₀, éventuellement substitué, soit un groupe hydrocarboné cyclique saturé en C₃ à C₁₀, éventuellement substitué, soit encore un groupe aryle ou hétéroaryle éventuellement substitué.

Dans ce qui précède et ce qui suit, on entend, classiquement, par « groupe hydrocarboné linéaire ou ramifié, saturé ou insaturé, en C₁ à C₂₀ », tout groupe alkyle, alcényle ou alcynyle qui comprend au moins 1 atome de carbone mais pas plus de 20 atomes de carbone. Un tel groupe est, par exemple, un groupe méthyle, éthyle, propyle, isopropyle, butyle, pentyle, néopentyle, hexyle, éthylényle, propylényle, butényle, pentényle, hexényle, méthylpentényle, buta-1,3-diényle, éthynyle, propynyle, butynyle, pentynyle, hexynyle, etc.

On entend, classiquement, par « groupe hydrocarboné cyclique saturé en C₃ à C₁₀ », tout groupe qui est formé d'un cycloalkyle ou de plusieurs cycloalkyles fusionnés et qui comprend au moins 3 atomes de carbone mais pas plus de 10 atomes de carbone. Un tel groupe est, par exemple, un groupe cyclopropyle, cyclobutyle, cyclo-pentyle, cyclohexyle, bicyclohexyle, bicyclodécyle, etc.

On entend, classiquement, par « groupe hétérocyclique saturé en C₃ à C₁₀ », un groupe monocyclique ou polycyclique qui comporte un ou plusieurs hétéroatomes et qui comprend au moins 3 atomes de carbone mais pas plus de 10 atomes de carbone. Un tel groupe est, par exemple, un groupe tétrahydrofuryle, tétrahydro-thiophényle, pyrrolidinyle, pipéridyle, dioxanyle, etc.

On entend, classiquement, par « groupe aryle », un groupe monocyclique ou polycyclique qui satisfait à la règle de Hückel, c'est-à-dire qui présente un nombre d'électrons n délocalisés égal à 4n + 2 (avec n = 0, 1, 2, 3, ...), et par « groupe hétéroaryle », un groupe tel qu'il vient d'être défini mais qui comprend un ou plusieurs hétéroatomes. A titre d'exemples de groupe aryle susceptible d'être utilisé, on peut citer les groupes cyclopentadiényle, phényle, benzyle, biphényle, pyrényle, naphtalényle, phénantrényle et anthracényle, tandis qu'à titre d'exemples de groupe hétéroaryle, on peut citer les groupes furanyle, pyrrolyle, thiophényle, oxazolyle, pyrazolyle, thiazolyle, imidazolyle, triazolyle, pyridinyle, pyranyle, quinoléinyle, pyrazinyle et pyrimidinyle.

Enfin, on entend, classiquement, par « hétéroatome », tout atome autre que de carbone ou d'hydrogène comme, par exemple, un atome d'oxygène, de soufre, d'azote, de phosphore ou encore de bore, étant entendu, toutefois, que les hétéroatomes susceptibles d'être impliqués dans des cycles sont des atomes d'oxygène, d'azote ou de soufre.

Conformément à l'invention, on préfère utiliser comme groupes hydrocarbonés cycliques saturés en C₃ à C₁₀ et comme groupes hétérocycliques saturés en C₃ à C₁₀, des groupes monocycliques à 5 ou 6 chaînons.

De manière similaire, on préfère utiliser comme groupes aryles ou hétéroaryles, des groupes monocycliques à 5 ou 6 chaînons ou des groupes polycycliques ne comportant pas plus de 3 cycles et, mieux encore, pas plus de 2 cycles, à 5 ou 6 chaînons chacun.

Conformément à l'invention, on préfère utiliser des dérivés répondant à la formule générale (I) dans laquelle R¹ représente un groupe -NR'R", où R' et R" ont la même signification que celle donnée précédemment, tandis que R² représente un atome d'hydrogène.

Selon une autre disposition préférée de l'invention, R³ représente un groupe relativement volumineux et encombrant d'un point de vue stérique de manière à limiter le phénomène d'auto-extinction (correspondant à la terminologie de « auto-quenching »). Aussi préfère-t-on que R³ représente un groupe cyclique, typiquement un groupe aryle ou hétéroaryle, substitué une ou plusieurs fois par un groupe alkyle ramifié en C₃ à C₆ comme, par exemple, un groupe isopropyle ou *t*-butyle. Un groupe cyclique de ce type est, par exemple, le groupe di-*t*-butylphényle.

Un premier composé fluorophore spécifique particulièrement avantageux est un fluorophore répondant à la formule (II) suivante :

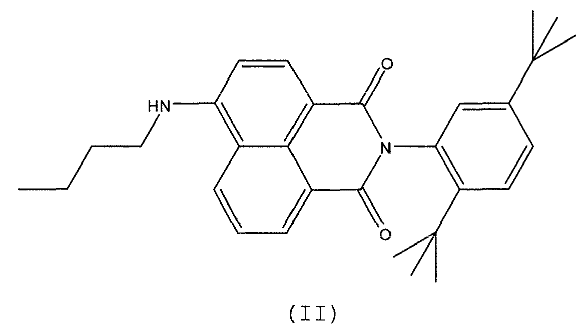

Les scintillateurs de l'invention peuvent comprendre une proportion de premier composé fluorophore allant de 0,05 à 2% en masse, de préférence de 1 à 2% en masse, par rapport à la masse totale du scintillateur.

Le deuxième composé fluorophore du type mentionné ci-dessus est un composé choisi parmi les composés pérylènediimides répondant à la formule (III) suivante : 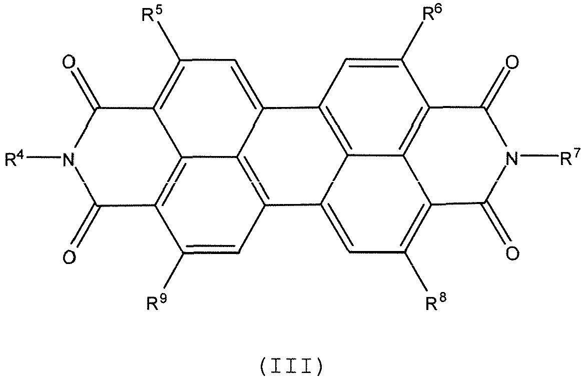 dans laquelle R⁴, R⁵, R⁶, R⁷, R⁸ et R⁹ représentent, indépendamment l'un de l'autre, un atome d'hydrogène, un groupe hydrocarboné linéaire ou ramifié, saturé ou insaturé, en C₁ à C₂₀, éventuellement substitué, un groupe aryle ou hétéroaryle éventuellement substitué.

Plus particulièrement, R⁴ et R⁷ peuvent représenter un groupe cyclique, typiquement un groupe aryle ou hétéroaryle, substitué une ou plusieurs fois par un groupe alkyle ramifié en C₃ à C₆ comme, par exemple, un groupe isopropyle ou *t*-butyle. Un groupe cyclique de ce type est, par exemple, le groupe di-t-butylphényle et R⁵, R⁶, R⁸ et R⁹ peuvent représenter un atome d'hydrogène ou un groupe alkyle, par exemple un groupe alkyle comprenant de 1 à 6 atomes de carbone.

Un composé pérylènediimide spécifique répondant à cette définition répond à la formule (IV) suivante :

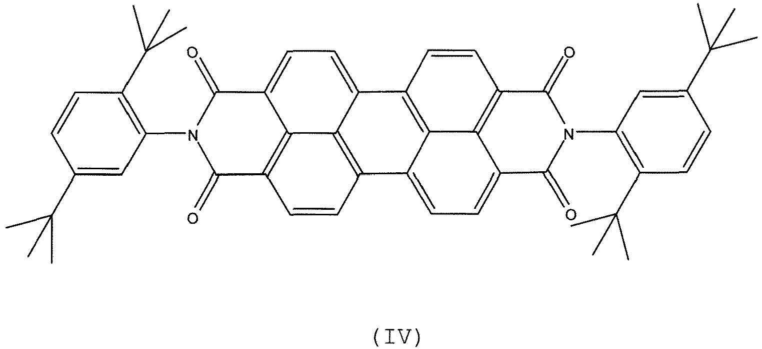

Les scintillateurs de l'invention peuvent comprendre une proportion de deuxième composé fluorophore allant de 0,002 à 1% en masse, de préférence de 0,05 à 1% en masse, par rapport à la masse totale du scintillateur.

Des scintillateurs particuliers conformes à l'invention sont des scintillateurs choisis parmi:
*les scintillateurs pour lesquels :
   - l'élément chimique est le plomb ou l'étain ;
   - la matrice polymérique comprend un copolymère comprenant des unités répétitives issues de la polymérisation du vinyltoluène et de l'acide méthacrylique ;
   - le premier composé fluorophore est un composé de formule (II) telle qu'explicitée ci-dessus et le deuxième composé fluorophore est un composé de formule (IV) telle qu'explicitée ci-dessus ; et
*les scintillateurs pour lesquels :
   - l'élément chimique est le plomb ;
   - la matrice polymérique comprend un (co)polymère comprenant des unités répétitives issues de la polymérisation du méthacrylate de 2-hydroxyéthyle ;
   - le premier composé fluorophore est un composé de formule (II) telle qu'explicitée ci-dessus et le deuxième composé fluorophore est un composé de formule (IV) telle qu'explicitée ci-dessus.

Les scintillateurs de l'invention peuvent se caractériser par l'une ou plusieurs des caractéristiques suivantes :
- une capacité à absorber des photons de longueurs d'onde pouvant aller de 350 à 500 nm ;
- une capacité à émettre un spectre d'émission présentant un pic d'émission à une longueur d'onde d'au moins égale à 550 nm et pouvant aller jusqu'à 620 nm ;
- un temps de déclin de scintillation pouvant aller de 10 à 15 ns.

D'un point de vue morphologique, les scintillateurs de l'invention peuvent se présenter sous des formes diverses, lesquelles sont fonction du moule utilisé. Ainsi, ils peuvent se présenter sous forme de cylindres ou de pavés.

Les scintillateurs de l'invention, de par leur nature polymérique, peuvent être préparés par différentes techniques de polymérisation permettant l'incorporation concomitante des éléments chimiques susmentionnés et des composés fluorophores susmentionnés.

En particulier, les scintillateurs de l'invention peuvent être préparés par un procédé comprenant les étapes suivantes :
- une étape de mise en contact d'au moins deux monomères, dont l'un au moins est complexé avec au moins un élément chimique tel que défini ci-dessus et d'au moins un composé fluorophore ;
- une étape de polymérisation desdits monomères, moyennant quoi le produit résultant comprend une matrice polymérique dans laquelle sont piégés le ou lesdits éléments chimiques et le ou lesdits composés fluorophores.

Lorsque les composés fluorophores comportent au moins un groupe hydrocarboné insaturé (tel qu'un groupe éthylénique), lesdits composés fluorophores peuvent participer directement à la réaction de polymérisation, moyennant quoi ils seront, à l'issue de l'étape de polymérisation, liés de façon covalente à ladite matrice.

L'étape de mise en contact et l'étape de polymérisation peuvent être réalisées dans un moule présentant des dimensions de nature à conférer au produit résultant les dimensions que l'on souhaite accorder aux scintillateurs de l'invention.

Les monomères peuvent être choisis parmi le styrène, le vinyltoluène, le vinylxylène, le méthacrylate de méthyle, l'acide méthacrylique, le méthacrylate de 2-hydroxyéthyle.

Les monomères complexés avec au moins un élément chimique peuvent être des monomères comprenant au moins deux fonctions polymérisables, tels que des monomères diméthacrylates (par exemple, le diméthacrylate de plomb).

L'invention va être à présent décrite au regard des exemples fournis ci-dessous à titre illustratif et non limitatif.

### BRÈVE DESCRIPTION DES DESSINS

La figure 1 est un graphique illustrant les différents mécanismes d'absorption d'un rayonnement présentant une énergie incidente donnée (représentée en abscisse par E et exprimée en keV) en fonction du nombre atomique (Z_{eff}) du matériau absorbeur (représenté en ordonnée par Z_{eff}).
La figure 2 est un graphique illustrant l'évolution du nombre atomique (Z_{eff}) d'un matériau en fonction de la teneur massique T en plomb dudit matériau.
La figure 3 illustre un dispositif mis en oeuvre pour la détermination du temps de déclin de scintillation des scintillateurs de l'invention.
La figure 4 illustre un dispositif mis en oeuvre pour la détermination du spectre d'absorption X des scintillateurs de l'invention.
La figure 5 illustre un dispositif mis en oeuvre pour la détermination du spectre d'émission visible sous excitation X.

### EXPOSÉ DÉTAILLÉ DE MODES DE RÉALISATION PARTICULIERS

Avant d'entrer plus en détail dans l'exposé de ces exemples, nous allons expliciter les protocoles de mesure des différentes grandeurs permettant de caractériser la présente invention, à savoir la teneur massique en élément chimique (exprimée en % massique par rapport à la masse totale du scintillateur), le temps de déclin de scintillation (exprimée en ns), le spectre d'absorption X, le spectre d'émission visible.

### *Protocole de mesure de la teneur massique en élément chimique

La teneur en plomb est déterminée *a priori* en calculant la concentration en élément plomb par rapport aux autres éléments constituant le scintillateur (C, H, N, S, O) (cette teneur est dénommée « teneur attendue » dans les tableaux de résultats des exemples).

Cette teneur en plomb est ensuite vérifiée *a posteriori* en réalisant une analyse élémentaire (cette teneur étant dénommée « teneur analysée » dans les tableaux de résultats des exemples). Pour ce faire, une petite portion du scintillateur est découpée puis broyée. Elle est ensuite analysée par un appareil permettant d'effectuer des microanalyses.

### *Protocole de mesure du temps de déclin de scintillation

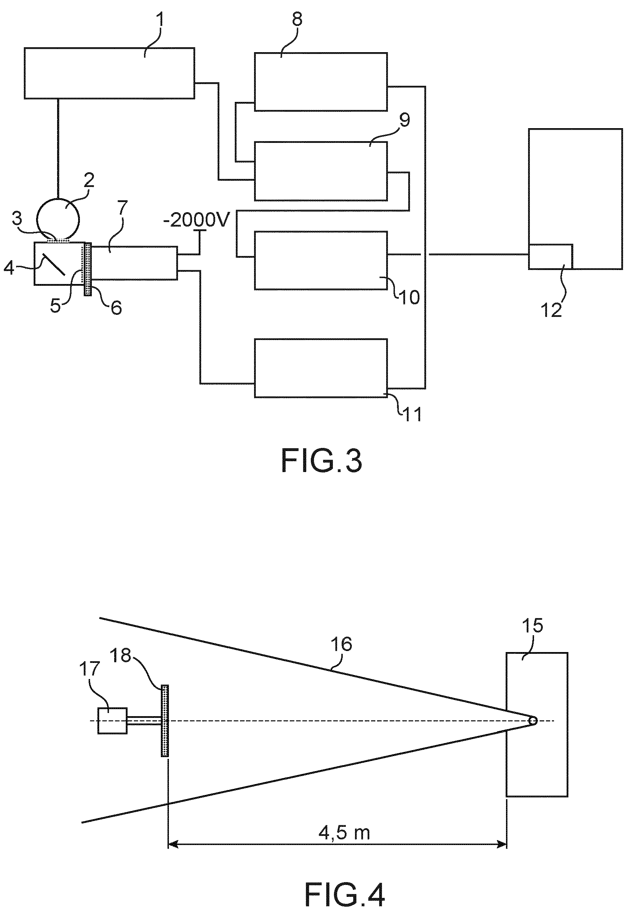

Le temps de déclin de scintillation des scintillateurs de l'invention est mesuré au moyen d'un dispositif représenté sur la figure 3 comprenant une lampe à décharge d'arcs électriques dans un gaz d'hydrogène 2, piloté par un rack 1, un tube photomultiplicateur 7 et une chaîne de comptage de photons uniques (composée d'un compteur de taux 8, d'un convertisseur temps-amplitude 9, d'une boîte à retard 10 et d'un discriminateur pico-temporel 11 et d'un ordinateur d'acquisition 12).

La lampe 2 génère des impulsions large spectre UV de durée 1 ns, à une fréquence de 40 Hz. Ces impulsions UV sont filtrées optiquement par un filtre interférentiel 3 passe-haut afin d'exciter au mieux (en fonction de la connaissance *a priori* du spectre d'excitation du solvant) le scintillateur 4 testé. Le scintillateur est placé dans un support fermé, l'isolant de la lumière ambiante. L'émission visible du scintillateur est ensuite filtrée par un filtre optique 5 passe-bande de manière à isoler la longueur d'onde la plus intense du spectre d'émission. Une densité optique 6 est placée entre le scintillateur et le tube photomultiplicateur. L'anode du tube photomultiplicateur 7 est reliée au discriminateur picoseconde 11. Ce discriminateur 11 est relié au compteur de taux 8. Le taux indiqué ne doit pas être supérieur à la fréquence de pilotage de la lampe 2, c'est-à-dire que l'on ne doit pas avoir plus d'un photon vu par le tube photomultiplicateur 7 par impulsion de la lampe 2. On ajuste au besoin l'intensité détectée par le tube photomultiplicateur 7 par la densité optique 6. Le compteur de taux 8 est relié à un convertisseur temps-amplitude 11, ce dernier étant connecté à l'ordinateur d'acquisition 12 (faisant office d'oscilloscope), dans lequel est logée dans une carte d'acquisition. L'acquisition dure le temps nécessaire à acquérir un signal représentant la décroissance d'intensité lumineuse du scintillateur 4 sur au moins quatre ordres de grandeur. A la fin de l'acquisition, on récupère un fichier informatique sous forme d'histogramme, associant un nombre de coups à des canaux, représentant une intensité relative en fonction du temps. La courbe est ensuite analysée au moyen d'un tableur numérique. A partir de l'instant d'intensité maximale, on ajuste la courbe par une fonction exponentielle décroissante. Le temps dit de déclin est celui de la fonction exponentielle décroissante présentant le meilleur coefficient de détermination.

### *Protocole de détermination du spectre d'absorption X

La détermination du spectre d'absorption X des scintillateurs de l'invention est effectuée au moyen d'un dispositif représenté sur la figure 4 annexée comprenant un générateur de rayonnement X 15 et un détecteur de rayons X en tellure de cadmium 17 sensible dans le domaine spectral de 10 à 100 keV.

Le détecteur 17 est placé à 4,5 m du générateur 15 de rayonnement X. Le générateur 15 de rayonnement X génère un spectre X issu du freinage d'électrons sur une anode de tungstène. L'énergie minimale détectable dans le spectre est de 20 keV. L'énergie maximale du spectre X dépend de la tension de commande. Par exemple, pour une tension de commande de 40 kV, l'énergie maximale contenue dans le spectre est 40 keV et ainsi de suite pour toutes les tensions possibles jusqu'à 160 kV. L'intensité de rayonnement est commandée par l'intensité du courant d'électrons venant frapper l'anode de tungstène, ainsi que le temps d'exposition du scintillateur 18. La fenêtre de sortie du générateur 15 est d'une taille de diamètre 30 mm à 10 cm de la source, ce qui définit le cône limitant 16 du flux de rayonnement X. Le détecteur 17 est placé à 4,5 m de la fenêtre de sortie du générateur 15. Cette distance permet d'irradier uniformément la surface sensible du détecteur 17, qui est de 25 mm².

On enregistre un spectre X ayant pour paramètres 40 kV, 40 mA et 30 s, sans scintillateur placé devant le détecteur. Ce spectre nous servira de référence. Ce spectre est pertinent pour des mesures d'absorption entre 20 et 40 keV. On plaque ensuite le scintillateur 18 sur le détecteur de rayonnement et on enregistre le spectre X répondant aux mêmes paramètres que celui enregistré sans scintillateur.

Après avoir récupéré l'histogramme délivré par le détecteur, on calcule, au moyen d'un tableur numérique, le rapport de l'intégrale d'énergie du spectre enregistré avec scintillateur à celle du spectre sans scintillateur. Ce calcul donne la transmission des rayons X du scintillateur pour un large spectre X. Le complément à 1 de ce rapport correspond à l'absorption des rayons X du scintillateur.

### *Protocole de détermination du spectre d'émission visible sous excitation X

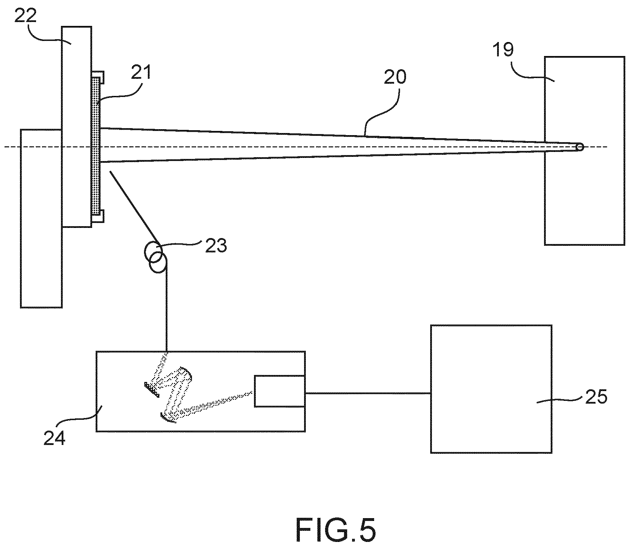

Le spectre d'émission visible des scintillateurs de l'invention est déterminé au moyen d'un dispositif comprenant un tube générateur de rayonnement X à anode de tungstène 19, d'un porte échantillon 22, d'une fibre optique de collecte 23, d'un monochromateur 24 et d'un ordinateur d'acquisition 25 représenté sur la figure 5 annexée.

On place le scintillateur 21 à 30 cm du volet obturateur de sortie du générateur 19. L'ouverture du volet est telle que le faisceau 20 de rayonnement X a une section carrée 10 mm x 10 mm sur la surface du scintillateur 21. On place une fibre optique 23 en regard du scintillateur 21, à une distance de 1 cm et en veillant à ce qu'elle ne se trouve pas dans l'axe de propagation du rayonnement X émis par le tube 21. Le monochromateur 24 comprend un réseau de diffraction à 300 traits par millimètre blazé 500 nm. La luminescence provenant du scintillateur 21 via la fibre optique 23 ainsi décomposée en ses multiples composantes est redirigée par un jeu de miroirs sur une caméra CCD ayant une partie en silicium sensible composée de 128 lignes par 1024 colonnes. Chaque zone de l'image restituée par la caméra CCD correspond à une longueur d'onde. L'ensemble monochromateur étant piloté par ordinateur nous restitue le spectre de luminescence du scintillateur 21 sous forme de graphique ayant en ordonnée une intensité relative en nombre de coups et en abscisse la longueur d'onde en nanomètres.

### Exemple 1 : Préparation d'un scintillateur conforme à l'invention

Le scintillateur conforme à l'invention préparé selon cet exemple comprend une matrice polymérique constitué d'un copolymère poly(vinyltoluène-co-acide méthacrylique) réticulé par du diméthacrylate de plomb, dans laquelle sont dispersés un premier composé fluorophore: le N-(2',5'-di-t-butylphényl)-4-butylamino-1,8-naphtalimide de formule (II) suivante : 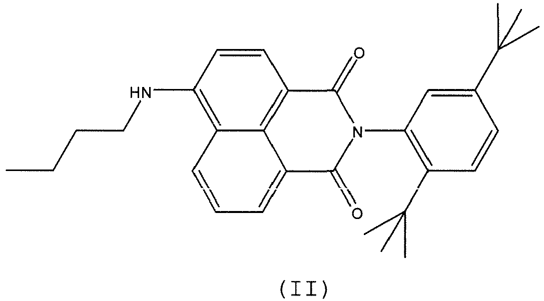 et un deuxième composé flurophore : le (bis-N-(2,5-di-t-butylphényl)-3,4,9,10-pérylènetétracarbodiimide) de formule (IV) suivante :

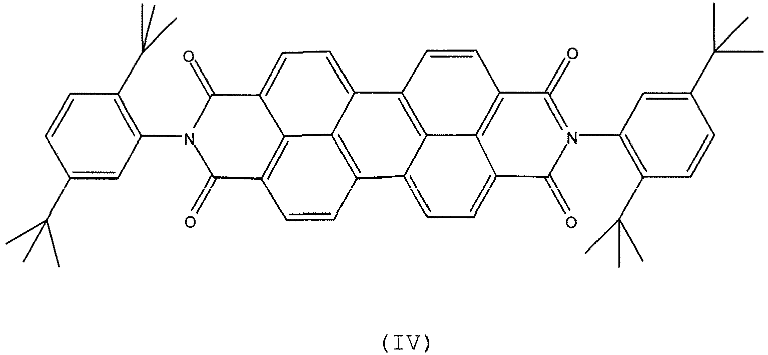

Dans un premier temps, il est procédé à la préparation du premier composé fluorophore puis à la préparation du scintillateur en tant que tel.

Le deuxième composé fluorophore est disponible commercialement.

### a) Préparation du N-(2',5'-di-t-butylphényl)-4-butylamino-1,8-naphtalimide

Le composé titre est préparé selon le schéma réactionnel suivant : 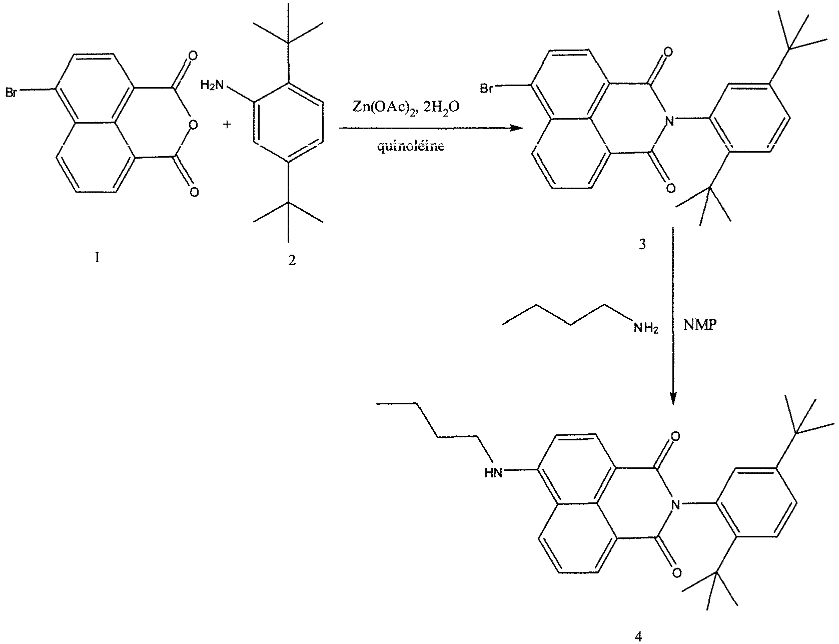 Ac signifiant acétyl et NMP signifiant N-méthylpyrrolidone.

Les composés 1 et 2 sont disponibles commercialement.

### *Synthèse du N-(2',5'-di-t-butylphényl)-4-bromo-1,8-naphtalimide ou composé 3

Dans un ballon de 250 mL équipé d'un réfrigérant à eau, 2,934 g (10,06 mmol) du composé **1** et 4,131 g (20,12 mmol) du composé **2** sont recouverts par 100 mL de quinoléine fraîchement distillée. Puis, 773 mg (3,52 mmol) d'acétate de zinc dihydraté sont ajoutés et le mélange réactionnel est chauffé au reflux du solvant pendant 5 heures. Après retour à température ambiante, le mélange est versé dans une solution aqueuse de pH = 1. La phase aqueuse est extraite au dichlorométhane. La phase organique est séchée, filtrée puis concentrée. Le résidu est finalement chromatographié sur gel de silice pour donner 4,583 g d'un solide beige (Rendement : 93%).

### Point de fusion : 214°C (dec., heptane)

RMN ¹H (250 MHz, CDCl₃) δ ppm : 1,19 (s, 9H, CH₃) ; 1,23 (s, 9H, CH₃) ; 6,91 (d, 1H, *J* = 2,2, H_{6'} ) ; 7,37 (dd, 1H, *J =* 8,7, *J =* 2,2, H_{4'}) ; 7,48-7,52 (m, 1H, H_{3'}) ; 7,80 (dd, 1H, *J* ₌ 8,5, *J* = 7,2, H₆) ; 7,99 (d, 1H, *J* = 8,0) ; 8,38 (d, 1H, *J* = 8,1) ; 8,55 (dd, 1H, *J* = 8,5, *J* = 1,3) ; 8,64 (dd, 1H, *J =* 7,2, *J =* 1,3)

RMN ¹³C (62,9 MHz) δ ppm : 31,2, 31,7, 34,2, 35,4, 122,6, 123,5, 126,3, 127,6, 128,1, 128,7, 129,4, 130,5, 130,8, 131,1, 131,6, 132,4, 132,5, 133,5, 143,7, 150,1, 164,52, 164,57

Infrarouge (neat, cm⁻¹) : 2960, 2873, 1666, 1589, 1496, 1357, 1234.

### *Synthèse du composé titre

Dans un ballon de 10 mL, le N-(2',5'-di-t-butylphényl)-4-bromo-1,8-naphtalimide (411 mg, 0,88 mmol) est mis en suspension dans de la N-méthylpyrrolidone (symbolisé NMP). La n-butylamine (437 µL, 4,42 mmol) est ajoutée, puis le mélange réactionnel est chauffé à 80°C pendant 24 heures. Après retour à température ambiante, le milieu réactionnel est purifié par passage sur colonne de gel de silice (préparé préalablement par addition de silice pulvérulente dans du dichlorométhane). Après recristallisation dans l'éther éthylique, le N-(2',5'-di-t-butylphényl)-4-butylamino-1,8-naphtalimide est isolé sous la forme d'une poudre jaune (403 mg, 98%).

Le produit obtenu présente un point de fusion de 233°C (dans l'éther diéthylique).

### b) Préparation du scintillateur en tant que tel

De l'acide méthacrylique pur (3 g, 34,8 mmol), du vinyltoluène pur (5 g, 42,3 mmol), du diméthacrylate de plomb (2 g, 5,3 mmol), du *N*-(2',5'-di-*t*-butylphényl)-4-butylamino-1,8-naphtalimide (5 mg, 0,011 mmol) et du bis-*N*-(2,5-di-*t*-butylphényl)-3,4,9,10-pérylènetétracarbodiimide (0,2 mg, 0,26 mmol) sont mélangés sous atmosphère inerte dans un flacon sec.

Le mélange est libéré de tout gaz par la méthode « freeze-pump-thaw » puis il est versé avec précaution dans un moule, qui donnera la forme finale du scintillateur. Le mélange placé dans le moule est soumis à un cycle thermique (dans un premier temps, 65°C pendant 4 jours ; dans un deuxième temps, 70°C pendant 2 jours puis dans un troisième temps, 100°C pendant 1 journée). Le produit résultant est ensuite démoulé puis poli jusqu'à obtenir un état de surface optiquement compatible avec les applications d'imagerie. Il se présente sous forme d'un cylindre de couleur orange, de diamètre 12 mm et d'une hauteur de 4 mm.

Le tableau ci-dessous résume les pourcentages massiques (exprimés par rapport à la masse totale du mélange) d'ingrédients utilisés pour réaliser ce scintillateur.

| Ingrédients | % massique |
|---|---|
| Vinyltoluène | 50 |
| Acide méthacrylique | 30 |
| Diméthacrylate de plomb | 20 |
| Premier composé fluorophore | 0,05 |
| Deuxième composé fluorophore | 0,002 |

Pour le scintillateur obtenu, il a été procédé aux mesures suivantes :
- la teneur massique en plomb par analyse élémentaire ;
- la mesure de la densité volumique ;
- la détermination du spectre d'absorption réalisé grâce à un spectrofluorimètre en observant l'intensité de fluorescence sous différentes longueurs d'onde d'excitation;
- la détermination de son spectre d'émission en excitant la molécule à son maximum d'excitation puis en enregistrant l'intensité de fluorescence obtenue grâce à un spectrofluorimètre ;
- le temps de déclin de scintillation, qui est obtenu en excitant le scintillateur grâce une lampe flash UV ;
- le nombre atomique effectif, déterminé par le logiciel XµDAT à partir de la proportion exacte de chaque élément mesurée par microanalyse.

Les résultats sont regroupés dans le tableau suivant.

| Grandeur | Résultats |
|---|---|
| Densité (en g.cm⁻³) | 1,17 |
| Spectre d'absorption (en nm) | 350-500 |
| Pic maximal du spectre d'émission (en nm) | 579 |
| Temps de déclin (en ns ±1 ns) | 13,3 |
| Nombre atomique effectif | 40,3 |
| Teneur massique en plomb | Attendue : 11% |
| | Analysée : 12,3% |

### Exemple 2 : Préparation d'un autre scintillateur conforme à l'invention

Le scintillateur conforme à l'invention préparé selon cet exemple comprend une matrice polymérique constitué d'un polymère poly(méthacrylate de 2-hydroxyéthyle) réticulé par du diméthacrylate de plomb, dans laquelle sont dispersés un premier composé fluorophore : le N-(2',5'-di-t-butylphényl)-4-butylamino-1,8-naphtalimide de formule (II) suivante : 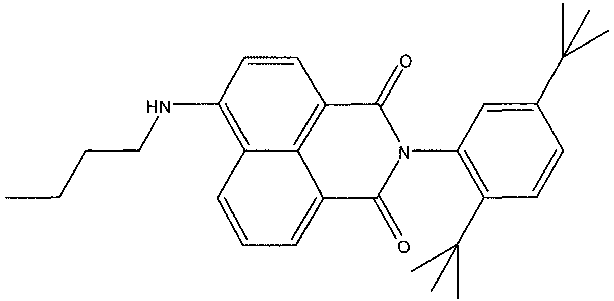 et un deuxième composé fluorophore : le (bis-*N*-(2,5-di-t-butylphényl)-3,4,9,10-pérylènetétracarbodiimide) de formule suivante :

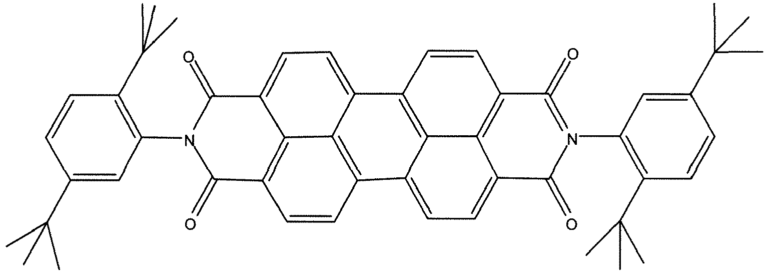

Le premier composé fluorophore est préparé selon le protocole opératoire exposé à l'exemple 1.

Le deuxième composé fluorophore est disponible commercialement.

Le scintillateur en tant que tel est préparé selon le protocole opératoire suivant.

Du méthacrylate de 2-hydroxyéthyle pur (5 g, 38,4 mmol), du diméthacrylate de plomb (5 g, 13,2 mmol), du *N*-(2',5'-di-*t*-butylphényl)-4-butylamino-1,8-naphtalimide (5 mg, 0,011 mmol) et du bis-*N*-(2,5-di-*t*-butylphényl)-3,4,9,10-pérylènetétracarbodiimide (0,2 mg, 0,26 µmol) sont mélangés sous atmosphère inerte dans un flacon sec.

Le mélange est libéré de tout gaz par la méthode « freeze-pump-thaw » puis il est versé avec précaution dans un moule, qui donnera la forme finale du scintillateur. Le mélange placé dans le moule est soumis à un cycle thermique (dans un premier temps, 85°C pendant 24 heures, dans un deuxième temps, 120°C pendant 5 heures puis dans un troisième temps, 90°C pendant 48 heures). Le produit résultant est ensuite démoulé puis poli jusqu'à obtenir un état de surface optiquement compatible avec les applications d'imagerie. Le scintillateur est obtenu sous la forme d'un cylindre de couleur orange, de diamètre 42 mm et d'une hauteur de 3 mm.

Le tableau ci-dessous résume les pourcentages massiques (exprimés par rapport à la masse totale du mélange) d'ingrédients utilisés pour réaliser ce scintillateur.

| Ingrédients | % massique |
|---|---|
| Méthacrylate de 2-hydroxyéthyle | 50 |
| Diméthacrylate de plomb | 50 |
| Premier composé fluorophore | 0,05 |
| Deuxième composé fluorophore | 0,002 |

Pour le scintillateur obtenu, il a été procédé aux mesures suivantes :
- la teneur massique en plomb ;
- la mesure de la densité en réalisant le rapport (masse/volume du scintillateur) ;
- la détermination du spectre d'absorption réalisé grâce à un spectrofluorimètre en observant l'intensité de fluorescence sous différentes longueurs d'onde d'excitation;
- la détermination de son spectre d'émission en excitant la molécule à son maximum d'excitation puis en enregistrant l'intensité de fluorescence obtenue grâce à un spectrofluorimètre ;
- le temps de déclin de scintillation;
- le nombre atomique effectif déterminé par le logiciel XµDAT à partir de la proportion exacte de chaque élément mesurée par microanalyse.

Les résultats sont regroupés dans le tableau suivant.

| Grandeur | Résultats |
|---|---|
| Densité (en g.cm⁻³) | 1,55 |
| Spectre d'absorption (en nm) | 350-500 |
| Pic maximal du spectre d'émission (en nm) | 591 |
| Temps de déclin (en ns ±1 ns) | 9,2 |
| Nombre atomique effectif | 53,1 |
| Teneur massique en plomb | Attendue : 27,4 % |
| | Analysée : 29,5 % |

### EXEMPLE 3

Le scintillateur conforme à l'invention préparé selon cet exemple comprend une matrice polymérique comprenant un copolymère poly(vinyltoluène-co-acide méthacrylique) réticulé par du n-dibutyldiméthacrylate d'étain, dans laquelle sont dispersés un premier composé fluorophore: le N-(2',5'-di-t-butylphényl)-4-butylamino-1,8-naphtalimide de formule (II) suivante : 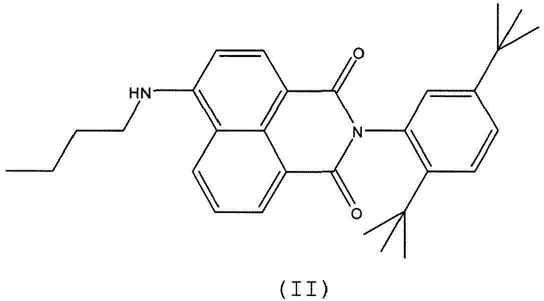 et un deuxième composé flurophore : le (bis-N-(2,5-di-t-butylphényl)-3,4,9,10-pérylènetétracarbodiimide) de formule (IV) suivante :

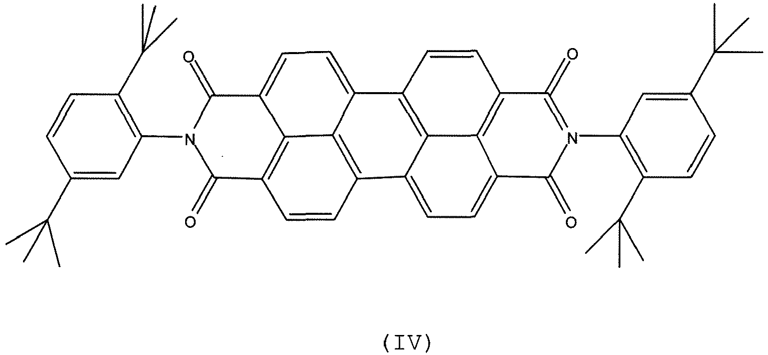

Dans un premier temps, il est procédé à la préparation du premier composé fluorophore puis à la préparation du scintillateur en tant que tel.

Le deuxième composé fluorophore est disponible commercialement.

Le scintillateur en tant que tel est préparé selon le protocole opératoire suivant.

De l'acide méthacrylique pur (2,525 g, 29,3 mmol), du vinyltoluène pur (2,525 g, 21,4 mmol), du n-dibutyldiméthacrylate d'étain (3,367 g, 8,3 mmol), du *N*-(2',5'-di-*t*-butylphényl)-4-butylamino-1,8-naphtalimide (4,2 mg, 0,01 mmol) et du bis-*N*-(2,5-di-*t-*butylphényl)-3,4,9,10-pérylènetétracarbodiimide (0,17 mg, 0,02 µmol) sont mélangés sous atmosphère inerte dans un flacon sec.

Le mélange est libéré de tout gaz par la méthode « freeze-pump-thaw » puis il est versé avec précaution dans un moule, qui donnera la forme finale du scintillateur. Le mélange placé dans le moule est chauffé à 85°C pendant 13 jours. Le produit résultant est ensuite ramené doucement à température ambiante pour être démoulé puis poli jusqu'à obtenir un état de surface optiquement compatible avec les applications d'imagerie.

Il se présente sous forme d'un cylindre de couleur orange, de diamètre 42 mm et d'une hauteur de 2,3 mm.

### EXEMPLE 4

Le scintillateur conforme à l'invention préparé selon cet exemple comprend une matrice polymérique comprenant un copolymère poly(vinyltoluène-co-acide méthacrylique) réticulé par du diméthacrylate de plomb, dans laquelle sont dispersés un premier composé fluorophore: le N-(2',5'-di-t-butylphényl)-4-butylamino-1,8-naphtalimide de formule (II) suivante : 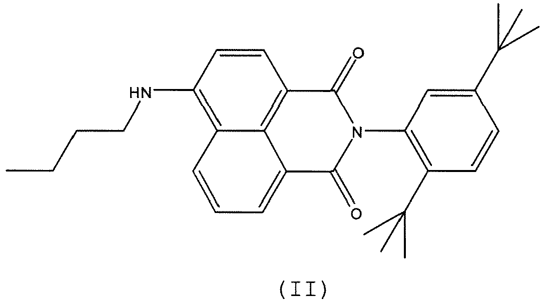 un deuxième composé flurophore : le (bis-N-(2,5-di-t-butylphényl)-3,4,9,10-pérylènetétracarbodiimide) de formule (IV) suivante : 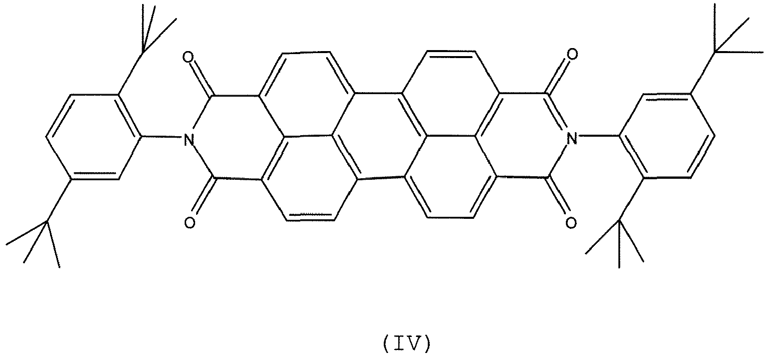 et un troisième composé fluorophore : le 2,5-diphényloxazole.

Le scintillateur en tant que tel est préparé selon le protocole opératoire suivant.

De l'acide méthacrylique pur (5,38 g, 62,5 mmol), du vinyltoluène pur (8,93 g, 75,6 mmol), du diméthacrylate de plomb (3,584 g, 9,5 mmol), du *N-*(2',5'-di-*t*-butylphényl)-4-butylamino-1,8-naphtalimide (17,9 mg, 0,040 mmol), du bis-*N*-(2,5-di-*t*-butylphényl)-3,4,9,10-pérylènetétracarbodiimide (1,8 mg, 2,35 µmol) et du 2,5-diphényloxazole (358 mg, 1,62 mmol) sont mélangés sous atmosphère inerte dans un flacon sec.

Le mélange est libéré de tout gaz par la méthode « freeze-pump-thaw » puis il est versé avec précaution dans un moule, qui donnera la forme finale du scintillateur. Le mélange placé dans le moule est chauffé à 65°C pendant 4 jours. Le produit résultant est ensuite ramené doucement à température ambiante pour être démoulé puis poli jusqu'à obtenir un état de surface optiquement compatible avec les applications d'imagerie.

Il se présente sous forme d'un cylindre de couleur orange, de diamètre 47 mm et d'une hauteur de 4,8 mm.

## Revendications

1. Scintillateur organique solide comprenant une matrice polymérique, dans laquelle sont dispersés un premier composé fluorophore et un deuxième composé fluorophore et un ou plusieurs éléments chimiques, choisis parmi Pb et Sn, **caractérisé en ce que** ledit scintillateur présente une teneur massique en ledit élément chimique au moins égal à 5% en masse par rapport à la masse totale du scintillateur et **en ce que** le scintillateur émet un spectre d'émission comprenant un pic d' émission à une longueur d'onde d' au moins 550 nm et présente un temps de déclin de scintillation inférieur à 20 ns,
dans lequel le premier composé répond à la formule (I) suivante : 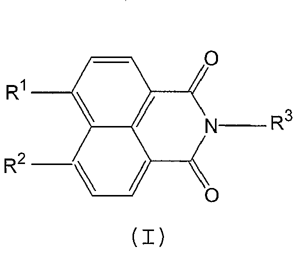 dans laquelle :
*R¹ représente un groupe mésomère donneur ;
*R² représente un atome d'hydrogène ou un groupe mésomère donneur identique ou différent de R¹ ;
*R³ représente :
- un groupe acyle, ou
- un groupe hydrocarboné linéaire ou ramifié, saturé ou insaturé, en C₁ à C₂₀, éventuellement substitué, ou
- un groupe hydrocarboné cyclique saturé en C₃ à C₁₀, éventuellement substitué, ou
- un groupe hétérocyclique saturé en C₃ à C₁₀, éventuellement substitué, ou encore
- un groupe aryle ou hétéroaryle éventuellement substitué ;
ou de l'un de ses sels ; et
dans lequel le deuxième composé est un composé pérylènediimide répondant à la formule (III) suivante : 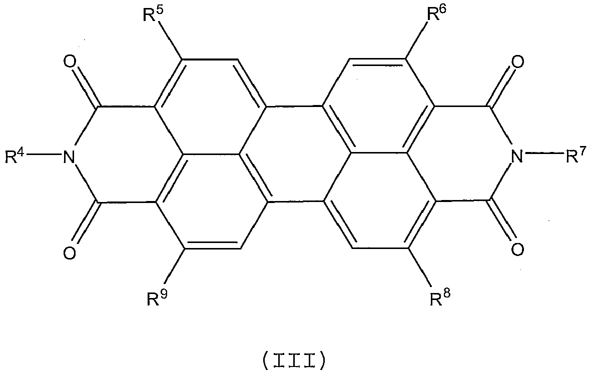 dans laquelle R⁴, R⁵, R⁶, R⁷, R⁸ et R⁹ représentent, indépendamment l'un de l'autre, un atome d' hydrogène, un groupe hydrocarboné linéaire ou ramifié, saturé ou insaturé, en C₁ à C₂₀, éventuellement substitué, un groupe aryle ou hétéroaryle éventuellement substitué.

2. Scintillateur selon la revendication 1, dans lequel le ou les éléments chimiques sont présents en une teneur allant de 10 à 27% en masse par rapport à la masse totale du scintillateur.

3. Scintillateur selon la revendication 1 ou 2, dans lequel l'élément chimique est le plomb.

4. Scintillateur selon l'une quelconque des revendications précédentes, dans lequel la matrice polymérique comprend un copolymère comprenant des unités répétitives résultant de la polymérisation du vinyltoluène et de l'acide méthacrylique.

5. Scintillateur selon l'une quelconque des revendications 1 à 3, dans lequel la matrice polymérique comprend un (co)polymère comprenant des unités répétitives résultant de la polymérisation du méthacrylate de 2-hydroxyéthyle.

6. Scintillateur selon l'une quelconque des revendications 4 ou 5, dans lequel le copolymère est réticulé.

7. Scintillateur selon la revendication 1, dans lequel R¹ représente un groupe. -NR'R", où R' représente un groupe hydrocarboné linéaire ou ramifié, saturé ou insaturé, en C₁ à C₂₀, éventuellement substitué, ou un groupe hydrocarboné cyclique saturé en C₃ à C₁₀, éventuellement substitué, ou encore un groupe aryle ou hétéroaryle éventuellement substitué, tandis que R" représente soit un atome d'hydrogène, soit un groupe hydrocarboné linéaire ou ramifié, saturé ou insaturé, en C₁ à C₂₀, éventuellement substitué, soit un groupe hydrocarboné cyclique saturé en C₃ à C₁₀, éventuellement substitué, soit encore un groupe aryle ou hétéroaryle éventuellement substitué.

8. Scintillateur selon la revendication 1 ou 7, dans lequel R³ représente un groupe cyclique, typiquement un groupe aryle ou hétéroaryle, substitué une ou plusieurs fois par un groupe alkyle ramifié en C₃ à C₆.

9. Scintillateur selon l'une quelconque des revendications 1, 7 ou 8, dans lequel le premier composé fluorophore répond à la formule (II) suivante :

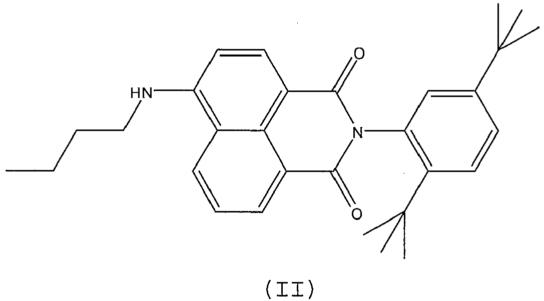

10. Scintillateur selon la revendication 1, dans lequel les R⁴ et R⁷ représentent un groupe cyclique, typiquement un groupe aryle ou hétéroaryle, substitué une ou plusieurs fois par un groupe alkyle ramifié en C₃ à C₆.

11. Scintillateur selon la revendication 1 ou 10, dans lequel le deuxième composé fluorophore répond à la formule (IV) suivante :

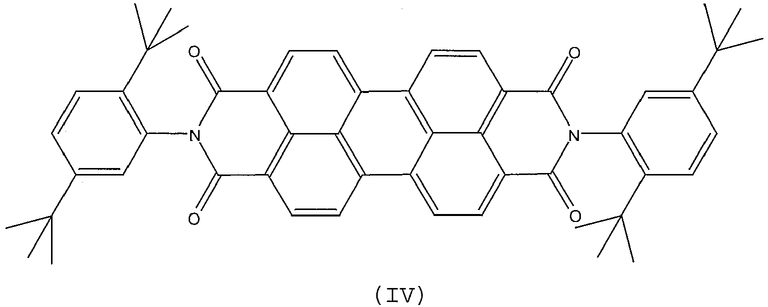

12. Scintillateur selon l'une quelconque des revendications 1 à 11, choisi parmi :
* les scintillateurs pour lesquels :
- l'élément chimique est le plomb ou de l'étain ;
- la matrice polymérique comprend un copolymère comprenant des unités répétitives issues de la polymérisation du vinyltoluène et de l'acide méthacrylique ;
- le premier composé fluorophore est un composé de formule (II) telle qu'explicitée à la revendication 9 et le deuxième composé fluorophore est un composé de formule (IV) telle qu'explicitée à la revendication 11 ; et
*les scintillateurs pour lesquels :
- l'élément chimique est le plomb ;
- la matrice polymérique comprend un (co)polymère comprenant des unités répétitives issues de la polymérisation du méthacrylate de 2-hydroxyéthyle ;
- le premier composé fluorophore est un composé de formule (II) telle qu'explicitée à la revendication 9 et le deuxième composé fluorophore est un composé de formule (IV) telle qu'explicitée à la revendication 11.

## Patentansprüche

1. Fester organischer Szintillator, umfassend eine Polymermatrix, in der eine erste Fluorophorverbindung und eine zweite Fluorophorverbindung sowie ein oder mehrere chemische Elemente dispergiert sind, die aus Pb und Sn ausgewählt sind, **dadurch gekennzeichnet, dass** der Szintillator einen Massengehalt an dem chemischen Element von wenigstens 5 Masse% bezogen auf die Gesamtmasse des Szintillators aufweist, und dass der Szintillator ein Emissionsspektrum emittiert, das einen Emissionspeak bei einer Wellenlänge von wenigstens 550 nm umfasst und eine Szintillationsabnahmezeit von weniger als 20 ns aufweist,
wobei die erste Verbindung der nachfolgenden Formel (I) genügt: 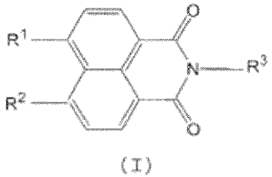 wobei:
* R¹ eine Mesomerdonatorgruppe darstellt;
* R² ein Wasserstoffatom oder eine Mesomerdonatorgruppe darstellt, die identisch mit oder verschieden von R¹ ist;
* R³ folgendes darstellt:
- eine Acylgruppe, oder
- eine lineare oder verzweigte Kohlenwasserstoffgruppe, gesättigt oder ungesättigt mit C₁ bis C₂₀, gegebenenfalls substituiert, oder
- eine zyklische Kohlenwasserstoffgruppe, gesättigt mit C₃ bis C₁₀, gegebenenfalls substituiert, oder
- eine heterozyklische Gruppe, gesättigt mit C₃ bis C₁₀, gegebenenfalls substituiert, oder auch
- eine Aryl- oder Heteroarylgruppe, gegebenenfalls substituiert;
oder eines der Salze davon; und
wobei die zweite Verbindung eine Perylendiimidverbindung ist, die der nachfolgenden Formel (III) genügt: 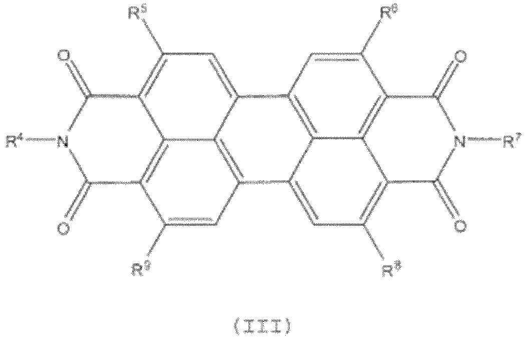 wobei R⁴, R⁵, R⁶, R⁷ , R⁸ und R⁹ unabhängig voneinander ein Wasserstoffatom, eine lineare oder verzweigte Kohlenwasserstoffgruppe, gesättigt oder ungesättigt mit C₁ bis C₂₀, gegebenenfalls substituiert, eine Aryl- oder Heteroarylgruppe, gegebenenfalls substituiert, darstellen.

2. Szintillator nach Anspruch 1, bei dem das oder die chemische Elemente in einem Gehalt vorhanden sind, der von 10 bis 27 Masse% bezogen auf die Gesamtmasse des Szintillators geht.

3. Szintillator nach Anspruch 1 oder 2, bei dem das chemische Element Blei ist.

4. Szintillator nach einem der vorhergehenden Ansprüche, bei dem die Polymermatrix ein Copolymer umfasst, das sich wiederholende Einheiten enthält, die aus der Polymerisation von Vinyltoluen und Methacrylsäure resultieren.

5. Szintillator nach einem der Ansprüche 1 bis 3, bei dem die Polymermatrix ein (Co)Polymer umfasst, das sich wiederholende Einheiten enthält, die aus der Polymerisation von Methacrylat von 2-Hydroxyethyl resultieren.

6. Szintillator nach einem der Ansprüche 4 oder 5, bei dem das Copolymer vernetzt ist.

7. Szintillator nach Anspruch 1, wobei R¹ eine Gruppe -NR'R" darstellt, wobei R' eine lineare oder verzweigte Kohlenwasserstoffgruppe darstellt, gesättigt oder ungesättigt mit C₁ bis C₂₀, gegebenenfalls substituiert, oder eine zyklische Kohlenwasserstoffgruppe, gesättigt mit C₃ bis C₁₀, gegebenenfalls substituiert, oder auch eine Aryl- oder Heteroarylgruppe, gegebenenfalls substituiert, wohingegen R" entweder ein Wasserstoffatom darstellt oder eine lineare oder verzweigte Kohlenwasserstoffgruppe, gesättigt oder ungesättigt mit C₁ bis C₂₀, gegebenenfalls substituiert, oder eine zyklische Kohlenwasserstoffgruppe, gesättigt mit C₃ bis C₁₀, gegebenenfalls substituiert, oder auch eine Aryl- oder Heteroarylgruppe, gegebenenfalls substituiert.

8. Szintillator nach Anspruch 1 oder 7, bei dem R³ eine zyklische Gruppe darstellt, typischerweise eine Aryl- oder Heteroarylgruppe, ein- oder mehrfach substituiert mit einer verzweigten Alkylgruppe mit C₃ bis C₆.

9. Szintillator nach einem der Ansprüche 1, 7 oder 8, bei dem die erste Fluorophorverbindung der nachfolgenden Formel (II) genügt:

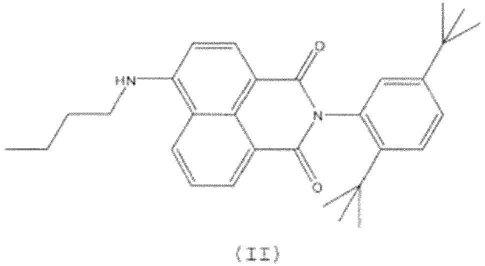

10. Szintillator nach Anspruch 1, bei dem die R⁴ und R⁷ eine zyklische Gruppe darstellen, typischerweise eine Aryl- oder Heteroarylgruppe, einfach oder mehrfach substituiert durch eine verzweigte Alkylgruppe mit C₃ bis C₆.

11. Szintillator nach Anspruch 1 oder 10, bei dem die zweite Fluorophorverbindung der nachfolgenden Formel (IV) genügt:

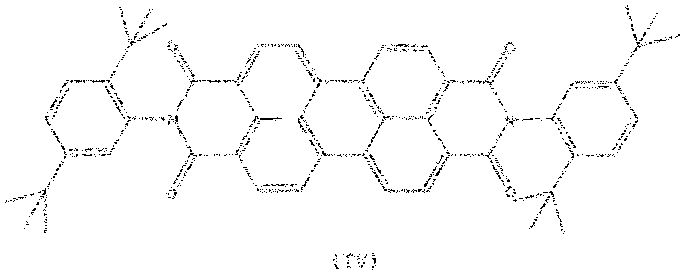

12. Szintillator nach einem der Ansprüche 1 bis 11, ausgewählt aus:
* den Szintillatoren, bei denen:
- das chemische Element Blei oder Zinn ist;
- die Polymermatrix ein Copolymer umfasst, das sich wiederholende Einheiten enthält, die aus der Polymerisation von Vinyltoluen und Methacrylsäure hervorgegangen sind;
- die erste Fluorophorverbindung eine Verbindung der Formel (II) wie in Anspruch 9 genannt ist, und die zweite Fluorophorverbindung eine Verbindung der Formel (IV) wie in Anspruch 11 genannt ist; und
* den Szintillatoren, bei denen:
- das chemische Element Blei ist;
- die Polymermatrix ein (Co)Polymer umfasst, das sich wiederholende Einheiten enthält, die aus der Polymerisation von Methacrylat von 2-Hydroxyethyl hervorgegangen sind;
- die erste Fluorophorverbindung eine Verbindung der Formel (II) wie in Anspruch 9 genannt ist, und die zweite Fluorophorverbindung eine Verbindung der Formel (IV) wie in Anspruch 11 genannt ist.

## Claims

1. A solid organic scintillator comprising a polymeric matrix in which are dispersed a first fluorophore compound and a second fluorophore compound and one or more chemical elements chosen from Pb and Sn, **characterized in that** said scintillator has a weight content of said chemical elements of at least 5 % by weight relative to the total weight of the scintillator, and **in that** the scintillator emits an emission spectrum comprising an emission peak at a wavelength of at least 550 nm and has a scintillation decay time of less than 20 ns,
wherein the first fluorophore compound meets following formula (I): 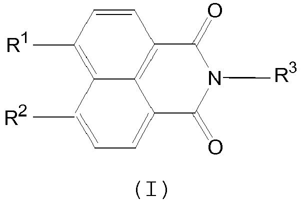 where:
*R¹ is a mesomeric donor group;
*R² is a hydrogen atom or mesomeric donor group the same or different from R¹;
*R³ is:
- an acyl group; or
- a straight-chain or branched, saturated or unsaturated C₁ to C₂₀ hydrocarbon group, optionally substituted, or
- a cyclic saturated C₃ to C₁₀ hydrocarbon group, optionally substituted; or
- a saturated C₃ to C₁₀ heterocyclic group, optionally substituted; or
- an aryl or heteroaryl group, optionally substituted ;
or one of the salts thereof,
wherein the second fluorophore compound is a perylene-diimide compound meeting following formula (III) : 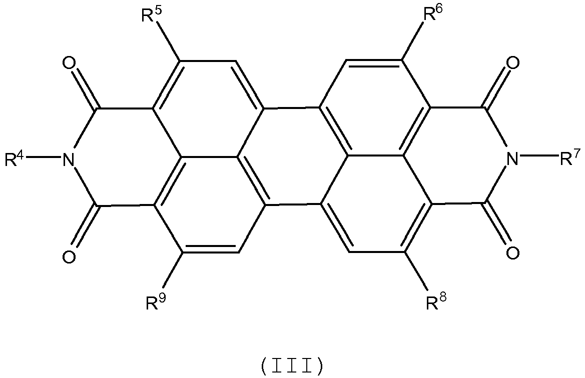 where R⁴, R⁵, R⁶, R⁷, R⁸ and R⁹ independently of each other represent a hydrogen atom, an optionally substituted straight-chain or branched, saturated or unsaturated C₁ to C₂₀ hydrocarbon group, an optionally substituted aryl or heteroaryl group.

2. The scintillator according to claim 1 wherein the content of the chemical element(s) ranges from 10 to 27 % by weight relative to the total weight of the scintillator.

3. The scintillator according to claim 1 or 2, wherein the chemical element is lead.

4. The scintillator according to any of the preceding claims wherein the polymeric matrix comprises a copolymer comprising repeat units resulting from the polymerization of vinyltoluene and methacrylic acid.

5. The scintillator according to any of claims 1 to 3, wherein the polymeric matrix comprises a (co)polymer comprising repeat units resulting from the polymerization of 2-hydroxyethyl methacrylate.

6. The scintillator according to any of claims 4 or 5 wherein the copolymer is cross-linked.

7. The scintillator according to claim 1 wherein R¹ represents a -NR'R" group, where R' has the same meaning as given in claim 13, whilst R" represents either a hydrogen atom, or a straight-chain or branched, saturated or unsaturated, C₁ to C₂₀ hydrocarbon group, optionally substituted, or a cyclic saturated C₃ to C₁₀ hydrocarbon group, optionally substituted, or an aryl or heteroaryl group optionally substituted.

8. The scintillator according to claim 1 or 7 wherein R³ represents a cyclic group, typically an aryl or heteroaryl group, substituted one or more times by a branched C₃ to C₆ alkyl group.

9. The scintillator according to any of claims 1, 7 or 8 wherein the first fluorophore compound meets following formula (II):

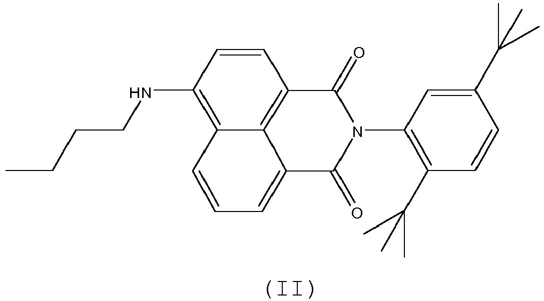

10. The scintillator according to claim 1 wherein R⁴ and R⁷ represent a cyclic group, typically an aryl or heteroaryl group, substituted one or more times by a branched C₃ to C₆ alkyl group

11. The scintillator according to claim 1 or 10 wherein the second fluorophore compound meets following formula (IV):

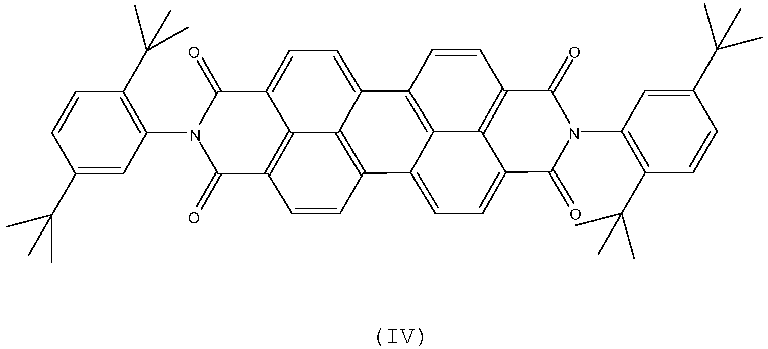

12. The scintillator according to any of claims 1 to 11, chosen from among:
* the scintillators in which:
- the chemical element is lead or tin;
- the polymeric matrix comprises a copolymer comprising repeat units derived from polymerization of vinyltoluene and methacrylic acid;
- the first fluorophore compound is a compound of formula (II) such as explained in claim 9 and the second fluorophore compound is a compound of formula (IV) such as explained in claim 11; and
*the scintillators in which:
- the chemical element is lead;
- the polymeric matrix comprises a (co)polymer comprising repeat units derived from the polymerization of 2-hydroxyethyl methacrylate;
- the first fluorophore compound is a compound of formula (II) such as explained in claim 9 and the second fluorophore compound is a compound of formula (IV) such as explained in claim 11.
